# EUROPÄISCHE PATENTSCHRIFT

(11) **EP 2 943 703 B1**
(45) Veröffentlichungstag und Bekanntmachung des Hinweises auf die Patenterteilung: **04.10.2017**
(21) Anmeldenummer: 13789224.6
(22) Anmeldetag: 29.10.2013
(51) Int. Cl.: B23P 15/06, B23P 9/02, F16J 9/02, F16J 9/20, F16J 9/22, F16J 9/26

(54) **KOLBENRING FÜR BRENNKRAFTMASCHINEN MIT ERHÖHTER ERMÜDUNGSFESTIGKEIT UND VERFAHREN ZU DESSEN HERSTELLUNG**
PISTON RING FOR INTERNAL COMBUSTION ENGINES WITH INCREASED FATIGUE STRENGTH, AND METHOD FOR PRODUCING SAME
SEGMENT DE PISTON À HAUTE RÉSISTANCE À LA FATIGUE POUR MOTEUR À COMBUSTION INTERNE ET PROCÉDÉ POUR LE FABRIQUER

(30) Priorität: 10.01.2013 DE 102013200261
(43) Veröffentlichungstag der Anmeldung: 18.11.2015
(73) Patentinhaber: Federal-Mogul Burscheid GmbH, 51399 Burscheid (DE)
(72) Erfinder: GRAY, Nigel, 51381 Leverkusen (DE); MACHLINER, Stephan, 51379 Leverkusen-Opladen (DE)
(74) Vertreter: Becker Kurig Straus
(86) Internationale Anmeldenummer: PCT/EP2013/072547
(87) Internationale Veröffentlichungsnummer: WO 2014/108226

(56) Entgegenhaltungen:
- EP-A1- 1 431 631
- EP-A1- 1 876 345
- EP-A2- 0 949 436
- WO-A1-88/00289
- WO-A1-2009/155677
- DE-A1- 1 751 573
- DE-A1- 2 349 516
- DE-A1- 3 903 722
- FR-A- 903 618
- US-A1- 2008 256 794
- US-A1- 2010 090 416
- US-A1- 2010 127 462

## Beschreibung

Die Erfindung betrifft einen Kolbenring sowie ein Verfahren zu seiner Herstellung. Der Kolbenring umfasst ein plastisch verformbaren Werkstoff und weist mindestens eine Kante zwischen einer Lauffläche und einer Kolbenringflanke auf, wobei in die Kante zwischen der Lauffläche und der Kolbenringflanke durch Rollieren Druckspannungen eingebracht sind.

Herkömmliche Kolbenringe neigen bei Belastung zu Ringbrüchen. Kolbenringe werden im Motorbetrieb thermisch und dynamisch belastet. Insbesondere hohe Verbrennungsdrücke in Verbindung mit den axialen Nutspielen führen dazu, dass sich die Kolbenringe in der Kolbenringnut eines Kolbens verwinden können. Dabei entstehen im Ringrücken, der dem Ringstoß am Kolbenring gegenüber liegt (bei 180°) an der unteren oder oberen Laufkante die größten Spannungen. Werden diese Spannungen zu groß, entstehen in der Randzone ein oder mehrere Haarrisse oder Anrisse. Diese Haarrisse vergrößern sich über Laufzeit weiter was schließlich zu einem Ringbruch führt.

Herkömmliche Möglichkeiten Ringbrüchen zu begegnen bestehen darin die Festigkeit des Materials zu erhöhen oder die Dicke des verwendeten Materials zu erhöhen. Bei Kantenbrüchen kann weiterhin die Festigkeit der Kante durch die Verwendung einer Einlage erhöht werden.

Die französische Patentanmeldung FR 903 618 A offenbart einen Kolbenring mit einer Verschleißschutzschicht auf einer äußeren Lauffläche, wobei in einer besonderen Ausführung die Verschleißschutzschicht einen trapezförmigen Querschnitt aufweisen kann.

Weiterhin treten bei Kolbenringen, die sich bei Belastung verwinden Ermüdungsbrüche auf, die von Haarrissen ausgehen, die sich an der Kante eines Kolbenrings gebildet haben.

Die Aufgabe der vorliegenden Erfindung besteht darin, die Bruchfestigkeit und die Ermüdungsfestigkeit von Kolbenringen zu erhöhen, die aus Metall wie Eisen oder Stahlmaterialien hergestellt sind.

Weiterhin besteht eine Aufgabe der vorliegenden Erfindung darin, das Rissbildungsverhalten Kolbenringen zu verbessern, die im Betrieb einer Verwindungsbelastung unterworfen sind.

Dieses Problem kann durch einen Kolbenring mit erhöhter Ermüdungsfestigkeit gelöst werden, der einen plastisch verformbaren Werkstoff umfasst. Der Kolbenring weist eine Lauffläche auf, die nach oben durch eine obere Laufflächenkante und nach unten durch eine untere Laufflächenkante begrenzt ist. Bei dem erfindungsgemäßen Kolbenring sind zumindest entlang eines Teils des Umfangs des Kolbenrings Druckspannungen in die obere Laufflächenkante und/oder in die untere Laufflächenkante eingebracht, wobei die Druckspannungen durch Rollieren in die der Kolbenringkante in diese eingebracht wurden.

Das Problem wird erfindungsgemäß durch eine lokale Erhöhung der Ermüdungsfestigkeit gelöst. Die Ermüdungsfestigkeit wird durch Rollieren mindestens eines Teils der Kante der Lauffläche des Kolbenrings erreicht. Das Rollieren stellt eine Art Walzen des Kolbenrings im Bereich der jeweiligen Kante dar, wodurch in dem Material Druckspannungen aufgebaut werden. Diese Druckspannungen sollen verhindern, dass bei einer Belastung der Kante des Kolbenrings Zugspannungen an der Oberfläche des Kolbenrings auftreten, die groß genug sind um eine Rissbildung zu bewirken. Durch die Druckspannungen verformt sich Kolbenring bei Belastung nicht so stark, was wiederum zur Verringerung einer Rissfortschreitung bei Wechselbelastungen führt. Erfindugnsgemäß wird das bekannte Bearbeitungsverfahren Rollieren, das bisher hauptsächlich zur Oberflächenglättung eingesetzt wird dazu verwendet, um Druckspannungen an der oberen und/oder der unteren Kante der Lauffläche des Kolbenrings zu erzeugen. Der Begriff "obere und/oder untere Kante der Lauffläche" des Kolbenrings ist so zu interpretieren, dass damit die Kante der Außenfläche und der unteren/oberen Flanke des Kolbenrings gemeint ist. Lediglich im Fall von Nasenringen wird zwischen den jeweiligen Kanten der Nase unterscheiden. Mit dem Rollieren können auch Druckspannungen an den oberen und/oder der unteren Außenkanten des Kolbenrings erzeugt werden. Durch Rollieren konnte unter einer örtlichen plastischen Deformierung des Metalls aus dem der Kolbenring gefertigt ist eine Erhöhung der Ermüdungsfestigkeit um 30% erreicht werden. Die vorliegende Erfindung ermöglicht so eine Erhöhung der Ermüdungs- und Bruchfestigkeit eines Kolbenrings ohne auf teure Materialen oder auf Entwürfe oder Auslegungen zurückgreifen zu müssen, die nur unter großen Kosten hergestellt werden können.

In einer weiteren Ausführungsform des Kolbenrings sind nur in der unteren Laufflächenkante Druckspannungen durch Rollieren eingebracht. Gerade die untere Kante der Lauffläche oder auch die untere Kante des Kolbenrings (sofern diese nicht zusammenfallen sollten), sind einer erhöhten Belastung durch die Verbrennungsgase unterworfen. Daher treten an der unteren Kante öfter Risse auf. In einer ersten einfachen Ausführungsform des erfindungsgemäßen Kolbenrings ist nur der untere Rand des Kolbenrings bzw. der Lauffläche durch Rollieren behandelt.

In einer anderen Ausführungsform des Kolbenrings sind nur bei der oberen Kante der Lauffläche Druckspannungen durch Rollieren eingebracht. Diese Ausführung ist insbesondere für Kolbenringe vorteilhaft, die im Berieb nach außen verwunden werden, d.h. bei denen die obere Außenkante im Betrieb durch Zugspannungen Belastet wird.

In einer zusätzlichen Ausführungsform des Kolbenrings sind sowohl in die obere als auch in die untere Laufflächenkante Druckspannungen durch Rollieren eingebracht. Diese Ausführungsform gestattet es die Kanten eines im Querschnitt rechteckigen Kolbenrings gegen Rissbildung zu schützen. Die Kanten eines Körpers sind besonders anfällig für die Bildung von Rissen, da das Material an der Kante auf zwei Seiten des Risses nicht durch weiteres Material gestützt wird, das Zugkräfte aufnehmen kann.

In einer weiteren Ausführungsform des Kolbenrings ist jeweils die Laufflächenkante mit einer Fase versehen, in die durch Rollieren Druckspannungen eingebracht sind. Die Fase wurde dabei durch das Rollieren erzeugt. Damit wurde die Kante durch das Rollieren in zwei getrennte Kanten mit jeweils wesentlich stumpferen Winkeln aufgeteilt.

In einer anderen Ausführungsform des Kolbenrings ist jeweils die Laufflächenkante durch Rollieren abgerundet, in die durch das Rollieren auch Druckspannungen eingebracht sind. Ein Verrundungsradius der Kante, die mit den Druckspannungen versehen wurde beträgt zwischen 20µm und 100µm, vorzugsweise zwischen 30µm 80µm und weiter bevorzugt zwischen 40µm und 60µm. Es ist ebenfalls ein Verrundungsradius von 50µm innerhalb der Herstellungstoleranzen angestrebt. Die Verrundung ermöglicht eine Vermeidung oder zumindest eine Verringerung von Kerbeffekten.

In einer weiteren Ausführungsform des Kolbenrings ist die Lauffläche weiter mit mindestens einer Verschleißschutz-Beschichtung oder einer Einlaufbeschichtung versehen. Je nach Art der Beschichtung kann diese vor oder nach dem Rollieren und dem Einbringen der Druckspannungen aufgebracht werden. Es ist jedoch darauf zu achten, dass der Kolbenring nach dem Einbringen der Druckspannungen durch das Rollieren nicht mehr stark erwärmt wird, da sonst ein Spannungsfrei-Glühen eintritt, das die eingebrachten Spannungen verringert. Weiterhin sollte beachtet werden, dass eine harte Verschleißschutzschicht ein Rollieren unmöglich machen kann, wenn die Schicht sich nicht verformen lässt und beim Rollieren bricht. Es ist vorgesehen, dass einen Teil der Lauffläche mit einer Verschleißschutzschicht versehen ist, wobei die Kante in die durch Rollieren Druckspannungen eingebracht sind, nicht mit der Verschleißschutzschicht versehen ist.

In einer anderen Ausführungsform des Kolbenrings umfasst der Kolbenring einen Eisen- oder Stahlwerkstoff, oder besteht im Wesentlichen oder vollständig aus einem Eisen- oder Stahlwerkstoff. Eisen und Stahlwerkstoffe lassen sich mit plastisch verformbaren Eigenschaften versehen, die für eine Bearbeitung durch Rollieren notwendig ist.

In einer weiteren Ausführungsform des Kolbenrings ist der Kolbenring als Kompressionsring ausgeführt. In einer anderen Ausführungsform des Kolbenrings ist der Kolbenring als Rechteckring ausgeführt. In einer zusätzlichen Ausführungsform des Kolbenrings ist der Kolbenring als Minutenring ausgeführt. In einer weiteren Ausführungsform des Kolbenrings ist der Kolbenring als Kolbenring mit Innenfase ausgeführt. In einer anderen Ausführungsform des Kolbenrings ist der Kolbenring als Kolbenring mit Innenwinkel ausgeführt. In einer zusätzlichen Ausführungsform des Kolbenrings ist der Kolbenring als Minutenring mit Innenfase ausgeführt. In einer weiteren Ausführungsform des Kolbenrings ist der Kolbenring als Minutenring mit Innenwinkel ausgeführt. In einer anderen Ausführungsform des Kolbenrings ist der Kolbenring als Doppeltrapezring ausgeführt. In einer zusätzlichen Ausführungsform des Kolbenrings ist der Kolbenring als einseitiger Trapezring ausgeführt. In einer weiteren Ausführungsform des Kolbenrings ist der Kolbenring als L-förmiger Verdichtungsring ausgeführt.

In einer anderen Ausführungsform des Kolbenrings ist der Kolbenring als Nasenring ausgeführt. In einer zusätzlichen Ausführungsform des Kolbenrings ist der Kolbenring als Nasen-Minutenring ausgeführt. Bei einem Nasen-(Minuten)-Ring fällt die Außenkante einer (unteren) Kolbenringflanke des Kolbenrings nicht mit der (unteren) Kante der Lauffläche des Kolberings zusammen. In diesem Fall kann auch nur an der Außenkante einer unteren Kolbenringflanke des Kolbenrings durch Rollieren Druckspannungen eingebracht sein. Vorzugsweise sind bei Nasen-(Minuten)-Ringen sowohl die Außenkante einer (unteren) Kolbenringflanke des Kolbenrings als auch die (untere) Kante der Lauffläche des Kolberings durch Rollieren mit Druckspannungen versehen. Die Nasen-(Minuten)-Ringe können im Stoß offen oder geschlossen ausgeführt sein, wobei ein offener Stoß die Bearbeitung stark vereinfacht.

In einer weiteren Ausführungsform des Kolbenrings sind die Druckspannungen nur in einem Teil des Umfangs des Kolbenrings eingebracht. Die Druckspannungen sind dabei nur in einem Winkelabstand von mindestens 45°, bevorzugt 90° weiter bevorzugt 135° zu einem Kolbenringstoß in die entsprechenden Kanten eingebracht. Dieser auch als Ringrücken bezeichnete Bereich des Kolbenrings nimmt die größten Spannungen auf. Somit ist der Ringrücken auch besonders für Risse und Brüche anfällig. Durch ein Einbringen der Druckspannungen nur in einen Teil des Umfangs des Kolbenrings kann insbesondere die Bearbeitungszeit und somit auch der Durchsatz an einer Rolliermaschine erhöht werden, wodurch sich die Kosten für diesen Arbeitsschritt senken lassen.

In einer anderen Ausführungsform des Kolbenrings sind die Druckspannungen entlang der gesamten oberen und/oder unteren Kante des Kolbenrings eingebracht. Diese Ausführung gestattet es den Rollervorgang mit sich schnell drehenden Maschinen durchzuführen wobei hier die Bearbeitung des gesamten Rings eine schnellere und maschinenschonende Bearbeitung der Kolbenringkanten ermöglicht.

Gemäß einem anderen Aspekt der vorliegenden Erfindung wird ein Verfahren zum Erhöhen einer Ermüdungs- und Bruchfestigkeit eines Kolbenrings bereitgestellt, der einen duktilen, plastisch verformbaren Werkstoff umfasst. Der Kolbenring weist eine Lauffläche auf, die nach oben durch eine obere Laufflächenkante und nach unten durch eine untere Laufflächenkante begrenzt ist. Das Verfahren umfasst das Einbringen von Druckspannungen in zumindest einem Teils des Umfangs des Kolbenrings, in dem die obere Laufflächenkante und/oder in die untere Laufflächenkante durch Rollieren bearbeitet werden. Dieser Verfahrenschritt wird einem weitgehend herkömmlich hergestellten Kolbenring als eines der letzten Fertigungsschritte durchgeführt. Die radial nach außen gerichtete Seite des Kolbenrings wird hier als Lauffläche betrachtet.

In einer weiteren Ausführungsform des Verfahrens wird nur die untere Laufflächenkante durch Rollieren mit Druckspannungen versehen.

In einer anderen Ausführungsform des Verfahrens wird nur die obere Laufflächenkante mit Druckspannungen durch das Verwenden eines Rollier-Vorgangs eingebracht.

In einer zusätzlichen Ausführungsform des Verfahrens werden beide Kanten, die obere und die untere Laufflächenkante zumindest Teilweise durch Rollieren an den Kanten mit Druckspannungen versehen.

In einer weiteren Ausführungsform des Verfahrens wird jeweils die Laufflächenkante, in die durch Rollieren Druckspannungen eingebracht sind, durch das Rollieren auch mit einer Fase versehen oder abgerundet. In dieser Ausführungsform wird der mittlere Rundungsradius der Kante bzw. der Kanten durch das Rollieren vergrößert. Eine abgerundete Kante weist (eventuell nach Nachbearbeitungsschritten) einen Verrundungsradius von 20µm bis 100µm, vorzugsweise zwischen 30µm 80µm und weiter bevorzugt zwischen 40µm und 60µm auf.

In einer zusätzlichen Ausführungsform des Verfahrens umfasst dieses ein Aufbringen einer Einlaufbeschichtung nach dem Schritt des Einbringens der Druckspannungen und/oder ein Aufbringen einer Verschleißschutz-Beschichtung, und/oder wobei der Schritt des Einbringens der Druckspannungen durch Rollieren nach einem Temper-Schritt durchgeführt wird. Unter Tempern soll hier jede Wärmebehandlung wie Härten oder Anlassen verstanden werden, die durch ihre Temperaturen geeignet ist Spannungen im Material wesentlich zu reduzieren. Durch das Tempern würden die eingebrachten Druckspannungen wieder abgebaut werden. Je nach gewählter Schutzschicht und notwendigen Verfahrensparametern wird der Schritt des Rollierens zum Einbringen von Druckspannungen vor oder nach einem Aufbringen einer Einlauf- oder Verschleißschutzschicht durchgeführt. Jedenfalls sollte das Rollieren erst nach dem letzten Verfahrensschritt durchgeführt werden, der so hohe Temperaturen erfordert, dass es zu einer Entspannung des Materials kommt.

In einer zusätzlichen Ausführungsform des Verfahrens werden in eine Außenkante einer unteren Kolbenringflanke des Kolbenrings durch Rollieren Druckspannungen eingebracht. Diese Ausführungsform dient vor allem für sogenannte Nasenringe, bei denen zwischen der unteren Kolbenringflanke und der Lauffläche des Kolbenrings eine Stufe angeordnet ist. Damit kann an den beiden konvexen Kanten deiner Nut die die Nase eines Nasenrings bildet die Druckspannungen eingebracht werden.

In einer weiteren Ausführungsform des Verfahrens werden Druckspannungen nur in einem Teil des Kolbenrings eingebracht, der einen Winkelabstand von mindestens 45°, bevorzugt 90° weiter bevorzugt 135° zu einem Kolbenringstoß aufweist. Dieser Teil des Kolbenrings der dem Kolbenringstoß gegenüberliegt wird auch als Ringrücken bezeichnet. Es ist also vorgesehen, den die untere Außenkante des Kolbenrings nur im Bereich des Ringrückens zu rollieren und mit Druckspannungen zu versehen.

In einer anderen Ausführungsform des Verfahrens, werden die Druckspannungen entlang der gesamten oberen und/oder unteren Kante des Kolbenrings eingebracht.

Es ist zudem zu bemerken, dass es nicht vorgesehen ist die Lauffläche außerhalb der Kanten zu rollieren oder mit Druckspannungen zu versehen. Es ist ebenfalls nicht vorgesehen, die Kolbenringflanken außerhalb der Kanten zu rollieren oder mit Druckspannungen zu versehen. Das Rollieren soll nur soweit von der Kante entfernt durchgeführt werden, dass an der Kante keine Grate entstehen, und ein glatter Übergang der abgerundeten Kante zu der Lauffläche bzw. der unteren (oberen) Kolbenringflanke sichergestellt werden kann.

Im Folgenden wir die Erfindung anhand von schematischen Figuren beispielhafter Ausführungsformen veranschaulicht.
Figur 1 stellt eine perspektivische Ansicht auf einen Kolbenring dar.
Figur 2 zeigt eine Elektronenmikroskopische Aufnahme einer Bruchstelle eines herkömmlichen Kolbenrings.
Figur 3 zeigt einen Querschnitt eines erfindungsgemäßen Kolbenrings, der mit einer Verschleißschutzschicht versehen ist.
Figur 4 zeigt eine Querschnittsansicht eines erfindungsgemäßen Kolbenrings, während eines erfindungsgemäßen Rolliervorgangs.
Figur 5 stellt ein Diagramm dar, das die Verbesserung der Ermüdungsfestigkeit eines erfindungsgemäßen Kolbenrings im Vergleich mit einem herkömmlichen Kolbenring darstellt.

Sowohl in den Figuren als auch in der Beschreibung werden gleiche Bezugszeichen für gleiche oder ähnliche Komponenten verwendet.

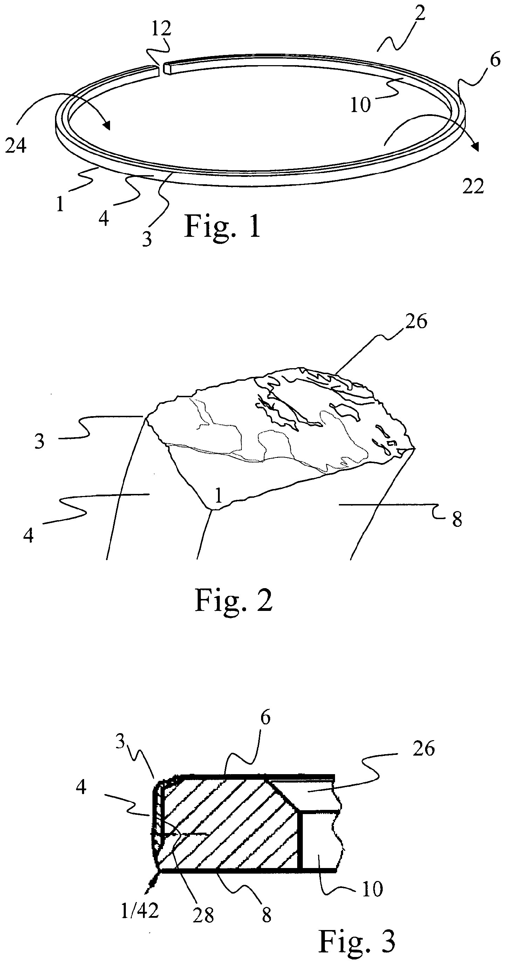

Figur 1 stellt eine perspektivische Ansicht auf einen Kolbenring 2 dar. Der Kolbenring 2 weist außen eine Lauffläche 4 auf. Die in der Figur nicht zu erkennende untere Seite des Kolbenrings bildet die untere Flanke des Kolbenrings 2, die in den anderen Figuren mit dem Bezugszeichen 8 versehen ist. Die obere Seite des Kolbenrings wird durch die obere Kolbenringflanke 6 gebildet. Die Lauffläche 4 trifft an der oberen Kante 3 der Lauffläche 4 auf die obere Kolbenringflanke 6. Die Lauffläche 4 trifft an der unteren Kante 1 der Lauffläche 4 auf die untere Kolbenringflanke, deren Bezugszeichen 8 nicht in dieser Figur dargestellt ist. Innen ist der Kolbenring durch die Innenfläche 10 des Kolbenrings begrenzt. Der Kolbenring 2 ist an dem Ringstoß 12 offen.

Bei Belastung kann der Kolbenring 2 an der Oberseite nach außen verdreht werden. Wenn der Kolbenring an der Oberseite nach außen verdreht wird kann dies auch als eine negative Verwindung (Twist) 22 bezeichnet werden. Durch diese negative Verwindung wird insbesondere die Kante 3 der Lauffläche 4 auf Zug belastet. Diese Zugbelastung kann eine Rissbildung and er oberen Kante 3 bewirken.

Der Kolbenring 2 kann bei Belastung jedoch auch an der Oberseite nach innen verdreht werden, was der Bewegungsrichtung für eine positive Verwindung (Twist) 24 entspricht. Durch diese positive Verwindung wird insbesondere die untere Kante 1 der Lauffläche 4 auf Zug belastet. Diese Zugbelastung kann zusammen mit der starken Belastung durch einen Druck der Verbrennungsgase eine Rissbildung and der unteren außen Kante 1 der Lauffläche bzw. des Kolbenrings 2 bewirken. Dabei ist die untere Kante 1 der Lauffläche 4 durch die größere Belastung weit Rissanfälliger als die obere Kante 3 der Lauffläche 4.

Der Kolbenring wurde an der unteren Kante 1 der Lauffläche 4 durch Rollieren mit Druckspannungen versehen, wodurch die untere Kante 1 ausgerundet ist und Druckspannungen aufweist. Diese Druckspannungen lassen sich durch Veränderungen des Metallgefüges an der rollierten unteren Kante 1 beispielsweise im Feinschliff nachweisen. Dies ist möglich, da der Rolliervorgang eine duktile Materialverlagerung bewirkt, die wiederum im geätzten Feinschliff unter einem Mikroskop nachweisbar ist. Der rollierte Bereich kann sehr klein und schmal sein, weshalb es möglich ist, dass der erfindungsgemäße Kolbenring nicht mit bloßem Auge von einem herkömmlichen Kolbenring unterschieden werden kann.

Figur 2 zeigt eine REM (Rater-Elektronenmikroskop) Aufnahme einer Bruchfläche eines herkömmlichen Kolbenrings. Hier sind die unterschiedlichen Topographien innerhalb der Bruchoberfläche deutlicher erkennbar: Ausgehend von der unteren Kante der Lauffläche bzw. Laufkante 1 wandert der Riss in den Ringquerschnitt. Dabei entsteht eine für einen Dauerbruch unter Wechselbelastung typische sehr feine Oberflächenstruktur. Ist eine Schwächung von ca. 1/3 des Ringquerschnitts erreicht, tritt ein Gewaltbruch ein, der an der typischen gröberen Oberflächenstruktur zu erkennen ist. Die Oberfläche des Gewaltbruchs ist dabei deutlich gröber strukturiert als der Bereich in dem ein Dauerbruch vorliegt. Die Lage des Kobenrings ist aufgrund der bezeichneten Oberen Laufflächenkante 3, der Lauffläche 4 und der unteren Flanke 8 des Kolbenrings sowie der Innenfase 26 eines Kolbenrings klar erkennbar.

Figur 3 zeigt einen Querschnitt eines erfindungsgemäßen Kolbenrings, der mit einer Verschleißschutzschicht versehen ist. Die Gestaltung der unteren Laufkante hat einen erheblichen Einfluss auf die Ermüdungs- bzw. Dauerbruchfestigkeit eines Kolbenrings. Beschichtete Kanten (Chrom, PVD) sind anfälliger gegenüber Rissbildung als unbeschichtete Kanten.

Weiterhin sind dicke Schichten aus harten Materialen ebenfalls stärker von Rissbildung betroffen als dünne Schichten. Weiterhin neigen hochfeste Verschleißschutzschichten eher zur Rissbildung als beispielsweise Einlaufschichten aus weniger festem Material. Scharfe Kanten, d.h. Kanten mit kleinen Krümmungsradien neigen eher zur Ausbildung von Rissen, als verrundete Kanten mit größeren Verrundungs-Radien.

Der Querschnitt von Figur 3 durch einen erfindungsgemäßen Kolbenring zeigt eine Ausführungsform, welche die mit Druckspannungen versehene untere Kante 1 der Lauffläche 4 mit den Merkmalen einer heute als günstige Ausführung eines angesehenen Kolbenrings hinsichtlich Dauerbruchfestigkeit kombiniert.

Der Ring 2 ist aus einem hochwertigen Guss-Werkstoff oder einem Stahl-Werkstoff gefertigt. Eine Beschichtung 28 weist eine möglichst geringe Dicke von mindestens 30µm auf (Die hier schematisch zu dick dargestellt ist). Die Verschleißschutzschicht 28 ist gekammert ausgeführt, wobei sich die Verschließschutzschicht 28 nicht bis zur unteren Kante 1 Lauffläche 4 erstreckt. Die untere Laufkante 1 liegt damit frei und kann daher auch bei Verwendung einer sehr harten Verschleißschutzschicht 28 durch Rollieren bearbeitet werden ohne dass Risse in der Beschichtung erzeugt werden. Die Untere Kante 1 ist rolliert wodurch in der unteren Kante 1 um Druckspannungen vorliegen. Durch das Rollieren wurde ein Verrundungsradius 42 von 45µm erzeugt. Der Verrundungsradius liegt zwischen 20µm und 70µmm bevorzugt zwischen 30µm und 60µm und weiter bevorzugt zwischen 40µm und 50µm. Die Verrundung kann durch Rollieren erreicht werden, oder es kann eine bereits vorverrundete Kante durch Rollieren mit Druckspannungen versehen werden.

Durch die Verrundung der unteren Laufkante 1 mit einem größeren Radius von 50µm gegenüber herkömmlichen 20µm lässt sich die Dauerbruchfestigkeit weiter steigern. Nach den bisherigen Erfahrungen ist ein Verrundungsradius der unteren Kante 1 Lauffläche 4 in einem Bereich zwischen 50 und 80µm in Bezug auf eine Ölabstreifwirkung noch vertretbar. Erst ab Verrundungsradien von über 100µm müssen Einschränkungen bezüglich der Ölabstreifwirkung erwartet werden.

Das Anbringen von großen Radien ist mit einer deutlichen Kostensteigerung im Ringherstellungsprozess verbunden, da definierte große Radien nur durch eine Einzelringbearbeitung erreicht werden können. Kleinere Verrundungs-Radien bis ca. 20µm im Mittel können durch ein kostengünstiges Polieren der Laufflächen in einer Paketbearbeitung erzielt werden.

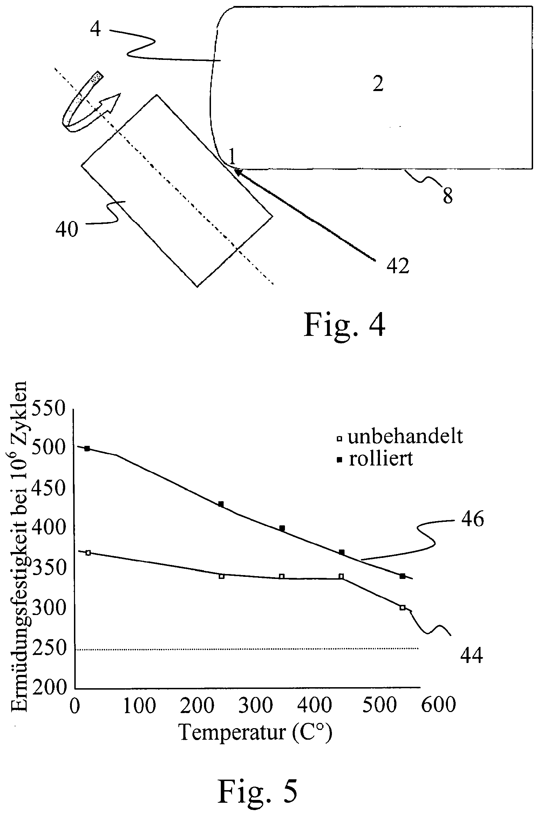

Figur 4 zeigt eine Querschnittsansicht eines erfindungsgemäßen Kolbenrings, während eines erfindungsgemäßen Rolliervorgangs. Hier wird die Rollierwalze 40 gegen die untere Kante 1 zwischen der Lauffläche 1 und der unteren Flanke 8 des Kolbenrings 2 gepresst, um eine Verrundung 42 zu erzeugen, Druckspannungen in der Kante aufzubauen und zu glätten. Die vorliegende Erfindung zielt auf eine weitere Erhöhung der Dauerfestigkeit ab. Erfindungsgemäß wird eine Kantenverrundung an den Ringen nicht -nur durch einen Materialabtrag sondern auch- durch eine Materialverdichtung und -Verlagerung (Rollieren) zumindest der unteren Kante 1 zwischen der Lauffläche 4 und der unteren Kolbenringflanke 8 des Kolbenrings erzielt. Durch das Rollieren und die Materialverdichtung beim Rollieren werden durch die Rollierwalze 40 an der Laufflächenkante 1 Druckspannungen in den Kolbenring im Bereich der höchsten Belastung 42 ins Material eingebracht. Druckspannungen in diesem kritischen Ringbereich wirken einer Entstehung von Rissen im Randbereich entgegen, wodurch die Dauerfestigkeit des Ringes weiter deutlich gesteigert wird. Der Effekt wird unter anderem dadurch erzielt, dass die Zugspannungen von der Oberfläche mit ihrer Oberflächenrauhigkeit unter die Oberfläche verlagert werden, in de ein im Idealfall Porenfreies verdichtetes Metallgefüge vorliegt. Ein Spannungsriss kann sich also nicht ausgehend von einer kleinen Oberflächenvertiefung mit Hilfe des Kerb-Effekts ausbreiten, da in dem Gefüge keine Oberflächenstrukturen vorliegen die als Ausgangspunkt für einen Spannungsriss dienen können. Weiterhin wirkt eine Kerbe direkt an der Oberfläche der Kante lediglich auf eine Bruchlinie in dem Material, während zwei Seiten des sich ausbreitenden Risses an der Oberfläche verlaufen. Im Gegensatz dazu wird eine Fehlstelle unter der Oberfläche des Materials an seinem gesamten äußeren Rand durch das Material gehalten. Daher breiten sich Risse bevorzugt unter Ausnutzung des Kerbeffektes von einer äußeren Oberfläche des Materials nach innen aus.

Figur 5 stellt ein Diagramm dar, das die Verbesserung der Ermüdungsfestigkeit eines erfindungsgemäßen Kolbenrings im Vergleich mit einem herkömmlichen Kolbenring darstellt. In dem Diagramm sind an der Abszisse Temperatur zwischen 0°C und 600°C aufgetragen. In der Ordinate ist die Ermüdungsfestigkeit unter der Einheit von 200 MPa bis 550 MPa bei 10⁶Zyklen dargestellt. Die untere Kurve 44 verbindet die Messpunkte eines herkömmlichen Kolbenrings. Die Ermüdungsfestigkeit nimmt dabei mit steigender Temperatur ab. Die obere Kurve 46 verbindet die Messpunkte eines erfindungsgemäßen Kolbenrings, bei dem die untere Kante zwischen der Lauffläche und der unteren Kolbenringflanke durch Rollieren mit Druckspannungen versehen wurde. Es ist klar zu erkennen, dass der erfindungsgemäße Kolbenring eine deutlich erhöhte Ermüdungsfestigkeit im Vergleich zu einem herkömmlichen Kolbenring zeigt. Die Ermüdungsfestigkeit nimmt dabei mit steigender Temperatur stärker ab, da die höheren Temperaturen den gleichen Effekt aufweisen wie ein Spannungsfreiglühen bei Metallwerkstoffen. Die durch die Druckspannung erzielten Effekte treten bei kälteren Kolbenringen stärker auf, da ein kalter Kolbenring eine insgesamt höhere Festigkeit aufweist.

Durch Rollieren konnte unter einer örtlichen plastischen Deformierung des Metalls aus dem der Kolbenring gefertigt ist eine Erhöhung der Ermüdungsfestigkeit um ca. 30% erreicht werden. Die vorliegende Erfindung ermöglicht so eine Erhöhung der Ermüdungs- und Bruchfestigkeit eines Kolbenrings ohne auf teure Materialen oder kostenintensiv Herzustellende Entwürfe oder Auslegungen zurückgreifen zu müssen.

Die vorliegende Erfindung wurde in Bezug auf die Figuren anhand von Ausführungsformen veranschaulicht, die nicht dazu verwendet werden sollen den Schutzbereich zu definieren oder einzuschränken. Die Ansprüche definieren den Schutzbereich der Erfindung. Die Offenbarung einzelner Merkmalskombinationen in den Figuren sollten ebenfalls auch andere Ausführungsformen als offenbart angesehen werden, die sich durch eine einfache Kombination der Merkmale der dargestellten Ausführungsformen kombinieren lassen.

### Bezugszeichenliste

- 1: untere Kante der Lauffläche (untere Laufkante)
- 2: Kolbenring
- 3: obere Kante der Lauffläche (untere Laufkante)
- 4: Lauffläche
- 6: obere Kolbenringflanke
- 8: untere Kolbenringflanke
- 10: Innenfläche des Kolbenrings
- 12: Ringstoß
- 22: Bewegungsrichtung für eine negative Verwindung (Twist)
- 24: Bewegungsrichtung für eine positive Verwindung (Twist)
- 26: Innenfase eines Kolbenrings mit Innenfase
- 28: Gekammerte Verschleißschutzschicht (untere Laufkante nicht beschichtet)
- 40: Rollierwalze
- 42: Verrundung der rollierten unteren Kante der Lauffläche
- 44: Ermüdungsfestigkeit eines herkömmlichen Kolbenrings
- 46: Ermüdungsfestigkeit eines rollierten Kolbenrings

## Patentansprüche

1. Kolbenring (2) mit erhöhter Ermüdungsfestigkeit, umfassend einen duktilen, plastisch verformbaren Werkstoff,
wobei der Kolbenring (2) eine Lauffläche (4) aufweist, die nach oben durch eine obere Laufflächenkante (3) und nach unten durch eine untere Laufflächenkante (1) begrenzt ist,
**dadurch gekennzeichnet, dass**
zumindest entlang eines Teils eines Umfangs des Kolbenrings durch Rollieren Druckspannungen in die obere Laufflächenkante (3) und/oder in die untere Laufflächenkante (1) eingebracht sind,
wobei jeweils die Laufflächenkante (1, 3), in die die Druckspannungen eingebracht sind durch das Rollieren ebenfalls mit einer Fase oder einem Verrundungsradius zwischen 20 und 100µm versehen ist.

2. Kolbenring (2) gemäß Anspruch 1, wobei nur in die untere Laufflächenkante (1) Druckspannungen eingebracht sind.

3. Kolbenring (2) gemäß Anspruch 1, wobei nur in die obere Laufflächenkante (3) Druckspannungen eingebracht sind.

4. Kolbenring (2) gemäß einem der vorstehenden Ansprüche, wobei der Verrundungsradius zwischen 30µm 80µm und bevorzugt zwischen 40µm und 60µm aufweist.

5. Kolbenring (2) gemäß einem der vorstehenden Ansprüche, wobei die Lauffläche (4) weiter mit mindestens einer Verschleißschutz-Beschichtung oder einer Einlaufbeschichtung versehen ist.

6. Kolbenring (2) gemäß einem der vorstehenden Ansprüche, wobei der Kolbenring einen Eisen- oder Stahlwerkstoff umfasst oder im Wesentlichen oder vollständig aus einem Eisen- oder Stahlwerkstoff besteht.

7. Kolbenring (2) gemäß einem der vorstehenden Ansprüche, wobei der Kolbenring weiter als Kompressionsring, als Rechteckring, als Minutenring, als Kolbenring mit Innenfase, als Kolbenring mit Innenwinkel, als Minutenring mit Innenfase, als Minutenring mit Innenwinkel, als Doppeltrapezring, als einseitiger Trapezring oder als L-förmiger Verdichtungsring, ausgeführt ist.

8. Kolbenring (2) gemäß einem der vorstehenden Ansprüche, wobei der Kolbenring als Nasenring oder als Nasen-Minutenring ausgeführt ist, wobei weiter in eine Außenkante (1) einer unteren Kolbenringflanke (8) des Kolbenrings (2) Druckspannungen durch Rollieren eingebracht sind.

9. Kolbenring (2) gemäß einem der vorstehenden Ansprüche, wobei die Druckspannungen nur in einem Teil des Kolbenrings eingebracht sind, der einen Winkelabstand von mindestens 45°, bevorzugt mindestens 90° weiter bevorzugt mindestens 135° zu einem Kolbenringstoß aufweist.

10. Kolbenring (2) gemäß einem der vorstehenden Ansprüche, wobei die Druckspannungen entlang der gesamten oberen und/oder unteren Laufflächenkante (3, 1) des Kolbenrings (2) eingebracht sind.

11. Verfahren zum Erhöhen einer Ermüdungsfestigkeit eines Kolbenrings (2) der einenduktilen, plastisch verformbaren Werkstoff umfasst, wobei der Kolbenring (2) eine Lauffläche (4) aufweist, die nach oben durch eine obere Laufflächenkante (3) und nach unten durch eine untere Laufflächenkante (1) begrenzt ist,
wobei das Verfahren **gekennzeichnet ist durch**,
Einbringen von Druckspannungen in zumindest einen Teil des Umfangs des Kolbenrings (2), in die obere Laufflächenkante (3) und/oder in die untere Laufflächenkante (1), wobei das Einbringen der Druckspannungen durch Rollieren erfolgt, und
wobei jeweils die Laufflächenkante (1, 3) durch das Rollieren mit einer Fase versehen oder abgerundet wird, wobei beim Abrunden ein Verrundungsradius von 20µm bis 100µm, erzielt wird.

12. Verfahren gemäß dem vorstehenden Anspruch 11, wobei beim Abrunden ein Verrundungsradius zwischen 30µm 80µm und bevorzugt zwischen 40µm und 60µm erzielt wird.

13. Verfahren gemäß einem der vorstehenden Ansprüche 11 bis 12, weiter umfassend aufbringen einer Einlaufbeschichtung nach dem Schritt des Einbringens der Druckspannungen und/oder aufbringen einer Verschleißschutz-Beschichtung, und/oder wobei der Schritt des Einbringens der Druckspannungen durch Rollieren nach einem Temper-Schritt durchgeführt wird.

14. Verfahren gemäß einem der vorstehenden Ansprüche 11 bis 13, wobei die Druckspannungen nur in einem Teil des Kolbenrings eingebracht werden, der einen Winkelabstand von mindestens 45°, bevorzugt mindestens 90° weiter bevorzugt mindestens 135° zu einem Kolbenringstoß aufweisen.

## Claims

1. A piston ring (2) having increased fatigue resistance, comprising a ductile, plastically deformable material, the piston ring (2) having a running face (4), which is delimited at the top by an upper running face edge (3) and at the bottom by a lower running face edge (1),
**characterised in that**
compressive stresses are introduced by roller burnishing into the upper running face edge (3) and/or into the lower running face edge (1) at least along a part of a circumference of the piston ring,
wherein each running face edge (1, 3) into which the compressive stresses are introduced is also provided with a bevel or a radius of curvature between 20 and 100µm by the roller burnishing.

2. The piston ring (2) according to Claim 1, wherein compressive stresses are only introduced into the lower running face edge (1).

3. The piston ring (2) according to Claim 1, wherein compressive stresses are only introduced into the upper running face edge (3).

4. The piston ring (2) according to any one of the preceding claims, wherein the radius of curvature is between 30µm 80µm, and preferably between 40µm and 60µm.

5. The piston ring (2) according to any one of the preceding claims, wherein the running face (4) is further provided with at least one wear protection coating or running-in coating.

6. The piston ring (2) according to any one of the preceding claims, wherein the piston ring comprises an iron or steel material or consists substantially or entirely of an iron or steel material.

7. The piston ring (2) according to any one of the preceding claims, wherein the piston ring is further formed as a compression ring, rectangular ring, taper faced ring, piston ring with inner bevel, piston ring with inner angle, taper faced ring with inner bevel, taper faced ring with inner angle, double-sided trapezium ring, single-sided trapezium ring or L-shaped compression ring.

8. The piston ring (2) according to any one of the preceding claims, wherein the piston ring is formed as a napier ring or taper faced napier ring, wherein compressive stresses are introduced into an outer edge (1) of a lower piston ring flank (8) of the piston ring (2) by roller burnishing.

9. The piston ring (2) according to any one of the preceding claims, wherein the compressive stresses are introduced only into a part of the piston ring that has an angular distance from a piston ring joint of at least 45°, preferably at least 90°, further preferably at least 135°.

10. The piston ring (2) according to any one of the preceding claims, wherein the compressive stresses are introduced along the entire upper and/or lower running face edge (3, 1) of the piston ring (2).

11. A method for increasing a fatigue resistance of a piston ring (2) that comprises a ductile, plastically deformable material, the piston ring (2) having a running face (4), which is delimited at the top by an upper running face edge (3) and at the bottom by a lower running face edge (1),
wherein the method is **characterised by** introducing compressive stresses into at least a part of the circumference of the piston ring (2), into the upper running face edge (3) and/or into the lower running face edge (1), wherein the compressive stresses are introduced by roller burnishing, and
wherein the running face edge (1, 3) is in each case provided with a bevel or rounded off by the roller burnishing process, wherein a radius of curvature of 20µm to 100µm is achieved during the rounding off process.

12. A method according to the preceding Claim 11, wherein a radius of curvature between 30µm 80µm, and preferably between 40µm and 60µm, is achieved during the rounding off process.

13. The method according to any one of the preceding Claims 11 to 12, further comprising applying a running-in coating after the step of introducing the compressive stresses and/or applying a wear protection coating, and/or wherein the step of introducing the compressive stresses by roller burnishing is carried out after a tempering step.

14. The method according to any one of the preceding Claims 11 to 13, wherein the compressive stresses are introduced only into a part of the piston ring that has an angular distance from a piston ring joint of at least 45°, preferably at least 90°, further preferably at least 135°.

## Revendications

1. Segment de piston (2) à haute résistance à la fatigue, comprenant un matériau ductile et déformable plastiquement,
dans lequel le segment de piston (2) présente une surface de roulement (4), qui est limitée vers le haut par une arrête de surface de roulement supérieure (3) et vers le bas par une arrête de surface de roulement inférieure (1),
**caractérisé en ce que**
au moins le long d'une partie d'une circonférence du segment de piston des tensions de pression sont appliquées par roulage dans l'arrête de surface de roulement supérieure (3) et/ou dans l'arête de surface de roulement inférieure (1),
dans lequel respectivement les arêtes de surface de roulement (1,3), dans lesquelles les tensions de pression sont appliquées, sont également pourvues par roulage d'un chanfrein ou d'un rayon d'arrondissement compris entre 20 et 100 µm.

2. Segment de piston (2) selon la revendication 1, dans lequel des tensions de pression sont appliquées seulement dans l'arrête de surface de roulement inférieure (1).

3. Segment de piston (2) selon la revendication 1, dans lequel des tensions de pression sont appliquées seulement dans l'arrête de surface de roulement supérieure (3).

4. Segment de piston (2) selon une des revendications précédentes, dans lequel le rayon d'arrondissement est compris entre 30µm et 80µm et de préférence entre 40µm et 60µm.

5. Segment de piston (2) selon une des revendications précédentes, dans lequel la surface de roulement (4) est en outre pourvue d'au moins un revêtement résistant à l'usure ou d'un revêtement qui s'use par frottement.

6. Segment de piston (2) selon une des revendications précédentes, dans lequel le segment de piston comprend un matériau de fer ou d'acier ou est constitué essentiellement ou en totalité d'un matériau de fer ou d'acier.

7. Segment de piston (2) selon une des revendications précédentes, dans lequel le segment de piston est en outre configuré comme une bague de compression, une bague rectangulaire, une bague de minuterie, un segment de piston avec un chanfreinage intérieur, un segment de piston avec un angle intérieur, une bague de minuterie avec un chanfreinage intérieur, une bague de minuterie avec un angle intérieur, une bague trapézoïdale double, une bague trapézoïdale sur une face ou une bague d'étanchéité en forme de L.

8. Segment de piston (2) selon une des revendications précédentes, dans lequel le segment de piston est configuré comme un anneau nasal ou comme un anneau de minuterie nasal, dans lequel en outre des tensions de pression sont appliquées par roulage dans une arrête extérieure (1) d'un flanc de segment de piston inférieur (8) du segment de piston (2).

9. Segment de piston (2) selon une des revendications précédentes, dans lequel les tensions de pression sont appliquées seulement dans une partie du segment qui présente une distance angulaire d'au moins 45°, de préférence au moins 90° et de manière encore préférée au moins 135° par rapport à une butée de segment de piston.

10. Segment de piston (2) selon une des revendications précédentes, dans lequel les tensions de pression sont appliquées le long de la totalité de l'arrête de surface de roulement supérieure et/ou inférieure (3,1) du segment du piston (2).

11. Procédé d'augmentation de la résistance à la fatigue d'un segment de piston (2), qui comprend un matériau ductile et déformable plastiquement, dans lequel le segment de piston (2) présente une surface de roulement (4), qui est limitée vers le haut par une arrête de surface de roulement supérieure (3) et vers le bas par une arrête de surface de roulement inférieure (1),
dans lequel le procédé est **caractérisé par** appliquer des tensions de pression au moins le long d'une partie d'une circonférence du segment de piston dans l'arrête de surface de roulement supérieure (3) et/ou dans l'arête de surface de roulement inférieure (1), dans lequel l'application des tensions de pression a lieu par roulage et
dans lequel respectivement les arêtes de surface de roulement (1,3) sont pourvues d'un chanfrein ou arrondies par roulage, dans lequel lors de l'arrondissement un rayon d'arrondissement de 20µm à 100µm est produit.

12. Procédé selon la revendication précédente 11, dans lequel lors de l'arrondissement un rayon d'arrondissement compris entre 30µm et 80µm et de préférence entre 40µm et 60µm est produit.

13. Procédé selon une des revendications précédentes 11 à 12, comprenant en outre d'appliquer un revêtement qui s'use par frottement après l'étape d'application de tensions de pression et/ou d'appliquer un revêtement de protection contre l'usure et/ou dans lequel l'étape d'application des tensions de pression par roulage est effectuée après une étape de recuit.

14. Procédé selon une des revendications précédentes 11 à 13, dans lequel les tensions de pression sont appliquées seulement dans une partie du segment de piston, qui présente une distance angulaire d'au moins 45°, de préférence au moins 90° et de manière encore préférée au moins 135° par rapport à une butée de segment de piston.
